# EUROPÄISCHE PATENTSCHRIFT

(11) **EP 1 572 826 B1**
(45) Veröffentlichungstag und Bekanntmachung des Hinweises auf die Patenterteilung: **11.10.2006**
(21) Anmeldenummer: 03758011.5
(22) Anmeldetag: 18.10.2003
(51) Int. Cl.: C09K 3/18, C08J 7/04

(54) **VERFAHREN ZUR HERSTELLUNG VON WASSERSPREITENDEN KUNSTSTOFFKOERPERN**
METHOD FOR PRODUCING WATER-DISPERSING PLASTIC BODIES
PROCEDE DE FABRICATION DE CORPS EN MATIERE PLASTIQUE PERMETTANT A L'EAU DE SE REPANDRE

(30) Priorität: 17.12.2002 DE 10259241
(43) Veröffentlichungstag der Anmeldung: 14.09.2005
(73) Patentinhaber: Röhm GmbH, 63457 Hanau (DE)
(72) Erfinder: HASSKERL, Thomas, 61476 Kronberg (DE); BECKER, Patrick, 64367 Mühltal (DE); NEEB, Rolf, 64319 Pfungstadt (DE); SEYOUM, Ghirmay, 63329 Egelsbach (DE)
(86) Internationale Anmeldenummer: PCT/EP2003/011537
(87) Internationale Veröffentlichungsnummer: WO 2004/055127

(56) Entgegenhaltungen:
- EP-A- 0 070 983
- EP-A- 0 149 182
- DE-A- 19 829 081

## Beschreibung

Die vorliegende Erfindung betrifft Verfahren zur Herstellung von wasserspreitenden Kunststoffkörpern, die ein Kunststoffsubstrat, eine wasserspreitende, anorganische Beschichtung und eine haftvermittelnde, sich zwischen dem Kunststoffsubstrat und der anorganischen Beschichtung befindliche Zwischenschicht aufweisen.

Wasserspreitende Kunststoffe haben die Eigenschaft, dass sich Wasser, welches auf ihre Oberfläche gerät, dort nicht zu voneinander getrennten Tropfen zusammenzieht, sondern dass sich die Tropfen ausbreiten und bei Berührung zu einer geschlossenen Schicht zusammenfließen. Dadurch werden eine verbesserte Lichtreflexion an der mit Wasser befeuchteten Oberfläche und - bei durchsichtigen Kunststoffen - eine bessere Lichtdurchlässigkeit erreicht und das Abtropfen von Wasser von der Unterseite des Kunststoffkörpers erschwert.

Es sind zahlreiche Versuche unternommen worden, beschlagschützende Beschichtungen aus vernetzten hydrophilen Polymeren auf wasserabstoßenden Kunststoffoberflächen zu erzeugen.

Nach DE-OS 21 61 645 wird eine derartige Beschichtung aus einem Mischpolymerisat aus Alkylestern, Hydroxyalkylestern und quartären Aminoalkylestern der Acryl- oder Methacrylsäure und Methylolethern des Methacrylamids als Vernetzungsmittel erzeugt. Sie nehmen zunächst unter Quellurg Wasser auf und gehen dabei allmählich in einen wasserspreitenden Zustand über. Infolge der Quellung wird die Beschichtung jedoch weich und empfindlich gegen mechanische Beschädigungen.

Des weiteren sind wasserspreitende Körper aus EP-A-0 149 182 bekannt. Diese Kunststoffkörper weisen eine anorganische Beschichtung auf Basis von SiO₂ auf.

Die in EP-A-0 149 182 beschriebenen Kunststoffkörper weisen ein gutes Eigenschaftsprofil auf. Problematisch ist jedoch deren Herstellung.

In EP-A-0 149 182 wird zwar auf die vielfältigen Möglichkeiten hingewiesen, die Beschichtungen auf das Kunststoffsubstrat aufzutragen. In den Beispielen wird lediglich das Rakeln beschrieben. Nachteilig hieran ist jedoch der relativ hohe maschinelle Aufwand, sowie die Anfälligkeit der hierbei verwendeten Anlagen.

Des weiteren wird in EP-A-0 149 182 auf die Möglichkeit des Gießens hingewiesen. Derartige Verfahren würden die zuvor dargelegten Probleme lösen. Problematisch ist jedoch, dass die Verwendung von Verlaufshilfsmittel notwendig ist, um einen gleichmäßigen Auftrag des Beschichtungsmittels zu gewährleisten. Dies führt jedoch im allgemeinen zu einer Abnahme der wasserspreitenden Wirkung der äußeren, anorganischen Beschichtung.

In Anbetracht des hierin angegebenen und diskutierten Standes der Technik war es mithin Aufgabe der vorliegenden Erfindung Verfahren zur Herstellung wasserspreitender Kunststoffkörper anzugeben, die ohne einen hohen maschinellen Aufwand auskommen, ohne dass die wasserspreitende Eigenschaft hierdurch nachteilig beeinflusst wird.

Darüber hinaus war es mithin Aufgabe der vorliegenden Erfindung Verfahren zur Herstellung wasserspreitender Kunststoffkörper zur Verfügung zu stellen, deren wasserspreitende Beschichtung eine besonders hohe Haftung auf den Kunststoffsubstraten aufweist. Diese Eigenschaft sollte durch Feuchtigkeit nicht beeinträchtigt werden.

Eine weitere Aufgabe der Erfindung bestand darin, daß die erhaltenen Kunststoffkörper eine hohe Haltbarkeit, insbesondere eine hohe Beständigkeit gegen UV-Bestrahlung oder Bewitterung aufweisen.

Des weiteren lag der Erfindung die Aufgabe zugrunde, ein Verfahren anzugeben, das besonders einfach in der Durchführung ist. So sollten zur Herstellung der Kunststoffkörper insbesondere Substrate verwendet werden können, die durch Extrusion, Spritzguss sowie durch Gussverfahren erhältlich sind.

Eine weitere Aufgabe der vorliegenden Erfindung bestand darin, Verfahren zur Herstellung von wasserspreitenden Kunststoffkörper anzugeben, die hervorragende mechanische Eigenschaften zeigen. Diese Eigenschaft ist insbesondere für Anwendungen wichtig, bei denen der Kunststoffkörper eine hohe Stabilität gegen Schlageinwirkung aufweisen soll.

Darüber hinaus sollten die mit dem Verfahren erhältlichen Kunststoffkörper besonders gute optische Eigenschaften aufweisen.

Ein weiteres Ziel der vorliegenden Erfindung bestand darin, ein Verfahren zur Herstellung von Kunststoffkörper bereitzustellen, wobei die herzustellenden Kunststoffkörper in Größe und Form den Anforderungen angepasst werden können, ohne dass jeweils eine neue Anlage hierfür benötigt wird.

Gelöst werden diese Aufgaben sowie weitere, die zwar nicht wörtlich genannt werden, sich aber aus den hierin diskutierten Zusammenhängen wie selbstverständlich ableiten lassen oder sich aus diesen zwangsläufig ergeben, durch die in Anspruch 1 beschriebenen Verfahren zur Herstellung von wasserspreitenden Kunststoffkörpern. Zweckmäßige Abwandlungen der erfindungsgemäßen Verfahren werden in den auf Anspruch 1 rückbezogenen Unteransprüchen unter Schutz gestellt.

Dadurch, dass man auf ein mit einer Zwischenschicht (b) versehenes Kunststoffsubstrat eine anorganische Beschichtung (a) durch Fluten aufbringt, wobei die zum Fluten verwendete Zusammensetzung mindestens ein Verlaufshilfsmittel mit mindestens einer anionischen Gruppe enthält, das eine hohe Mischbarkeit mit Wasser aufweist, gelingt es Verfahren zur Herstellung wasserspreitender Kunststoffkörper zur Verfügung zu stellen, das ohne großen apparativen Aufwand durchgeführt werden kann, ohne dass die wasserspreitende Eigenschaft der Kunststoffkörper hierdurch nachteilig beeinflusst wird.

Durch die erfindungsgemäßen Maßnahmen werden u.a. insbesondere folgende Vorteile erzielt:
- Die wasserspreitenden Beschichtungen der erfindungsgemäß hergestellten Kunststoffkörper weisen eine besonders hohe Haftung auf den Kunststoffsubstraten auf, wobei diese Eigenschaft auch bei Einwirkung von Feuchtigkeit nicht beeinträchtigt wird.
- Durch das erfindungsgemäße Verfahren können insbesondere große Platten durch Fluten beschichtet werden, ohne dass der Unterschied in der Schichtdicke am oberen Rand zum unteren Rand allzu groß werden würde.
- Die gemäß dem Verfahren der vorliegenden Erfindung erhaltenen Kunststoffkörper zeigen eine hohe Beständigkeit gegen UV-Bestrahlung.
- Das erfindungsgemäße Verfahren ist einfach in der Durchführung, wobei insbesondere auf kostenintensive Anlagen verzichtet werden kann.
- Das Verfahren zur Herstellung von Kunststoffkörpern kann auf bestimmte Erfordernisse angepasst werden. Insbesondere kann die Größe und die Form des Kunststoffkörpers in weiten Bereichen variiert werden, ohne dass hierdurch eine aufwendige Justierung der Anlagen notwendig wird. Des weiteren stellt die vorliegende Erfindung auch Kunststoffkörper mit hervorragenden optischen Eigenschaften zur Verfügung.
- Die Kunststoffkörper der vorliegenden Erfindung weisen gute mechanische Eigenschaften auf.

Die erfindungsgemäßen Kunststoffkörper sind durch Beschichtung von Kunststoffsubstraten erhältlich. Für die Zwecke der vorliegenden Erfindung geeignete Kunststoffsubstrat sind an sich bekannt. Derartige Substrate umfassen insbesondere Polycarbonate, Polystyrole, Polyester, beispielsweise Polyethylenterephthalat (PET), die auch mit Glykol modifiziert sein können, und Polybutylenterephthalat (PBT), cycloolefinische Polymere(COC) und/oder Poly(meth)acrylate. Bevorzugt sind hierbei Polycarbonate, cycloolefinische Polymere und Poly(meth)acrylate, wobei Poly(meth)acrylate besonders bevorzugt sind.

Polycarbonate sind in der Fachwelt bekannt. Polycarbonate können formal als Polyester aus Kohlensäure und aliphatischen oder aromatischen Dihydroxy-Verbindungen betrachtet werden. Sie sind leicht zugänglich durch Umsetzung von Diglykolen oder Bisphenolen mit Phosgen bzw. Kohlensäurediestern in Polykondensations- bzw. Umesterungsreaktionen.

Hierbei sind Polycarbonate bevorzugt, die sich von Bisphenolen ableiten. Zu diesen Bisphenolen gehören insbesondere 2,2-Bis-(4-hydroxyphenyl)-propan (Bisphenol A), 2,2-Bis-(4-hydroxyphenyl)-butan (Bisphenol B), 1,1-Bis(4-hydroxyphenyl)cyclohexan (Bisphenol C), 2,2'-Methylendiphenol (Bisphenol F), 2,2-Bis(3,5-dibrom-4-hydroxyphenyl)propan (Tetrabrombisphenol A) und 2,2-Bis(3,5-dimethyl-4-hydroxyphenyl)propan (Tetramethylbisphenol A).

Üblich werden derartige aromatische Polycarbonate durch Grenzflächenpolykondensation oder Umesterung hergestellt, wobei Einzelheiten in Encycl. Polym. Sci. Engng. 11, 648-718 dargestellt sind.

Bei der Grenzflächenpolykondensation werden die Bisphenole als wäßrige, alkalische Lösung in inerten organischen Lösungsmitteln, wie beispielsweise Methylenchlorid, Chlorbenzol oder Tetrahydrofuran, emulgiert und in einer Stufenreaktion mit Phosgen umgesetzt. Als Katalysatoren gelangen Amine, bei sterisch gehinderten Bisphenolen auch Phasentransferkatalysatoren zum Einsatz. Die resultierenden Polymere sind in den verwendeten organischen Lösungsmitteln löslich.

Über die Wahl der Bisphenole können die Eigenschaften der Polymere breit variiert werden. Bei gleichzeitigem Einsatz unterschiedlicher Bisphenole lassen sich in Mehrstufen-Polykondensationen auch Block-Polymere aufbauen.

Cycloolefinische Polymere sind Polymere, die unter Verwendung von cyclischen Olefinen, insbesondere von polycyclischen Olefinen erhältlich sind.

Cyclische Olefine umfassen beispielsweise monocyclische Olefine, wie Cyclopenten, Cyclopentadien, Cyclohexen, Cyclohepten, Cycloocten sowie Alkylderivate dieser monocyclischen Olefine mit 1 bis 3 Kohlenstoffatomen, wie Methyl, Ethyl oder Propyl, wie beispielsweise Methylcyclohexen oder Dimethylcyclohexen, sowie Acrylat- und/oder Methacrylatderivate dieser monocyclischen Verbindungen. Darüber hinaus können auch Cycloalkane mit olefinischen Seitenketten als cyclische Olefine verwendet werden, wie beispielsweise Cyclopentylmethacrylat.

Bevorzugt sind verbrückte, polycyclische Olefinverbindungen. Diese polycyclischen Olefinverbindungen können die Doppelbindung sowohl im Ring aufweisen, es handelt sich hierbei um verbrückte polycyclische Cycloalkene, als auch in Seitenketten. Hierbei handelt es sich um Vinylderivate, Allyloxycarboxyderivate und (Meth)acryloxyderivate von polycyclischen Cycloalkanverbindungen. Diese Verbindungen können des weiteren Alkyl-, Aryl- oder Aralkylsubstituenten aufweisen.

Beispielhafte polycyclische Verbindungen sind, ohne daß hierdurch eine Einschränkung erfolgen soll, Bicyclo[2.2.1]hept-2-en (Norbornen), Bicyclo[2.2.1]hept-2,5-dien (2,5-Norbornadien), Ethyl-bicyclo[2.2.1]hept-2-en (Ethylnorbornen), Ethylidenbicyclo[2.2.1]hept-2-en (Ethyliden-2-norbornen), Phenylbicyclo[2.2.1]hept-2-en, Bicyclo[4.3.0]nona-3,8-dien, Tricyclo[4.3.0.1^{2,5}]-3-decen, Tricyclo[4.3.0.1^{2,5}]-3,8-decen-(3,8-dihydrodicyclopentadien), Tricyclo[4.4.0.1^{2,5}]-3-undecen, Tetracyclo[4.4.0.1^{2,5},1^{7,10}]-3-dodecen, Ethylidentetracyclo[4.4.0.1^{2,5}.1^{7,10}]-3-dodecen, Methyloxycarbonyltetracyclo[4.4.0.1^{2,5},1^{7,10}]-3-dodecen, Ethyliden-9-ethyltetracyclo[4.4.0.1^{2,5},1^{7,10}]-3-dodecen, Pentacyclo[4.7.0.1^{2,5},O,O^{3,13},1^{9,12}]-3-pentadecen, Pentacyclo[6.1.1^{3,6}.0^{2,7}.0^{9,13}]-4-pentadecen, Hexacyclo[6.6.1.1^{3,6}.1^{10,13}.0^{2,7}.0^{9,14}]-4-heptadecen, Dimethylhexacyclo[6.6.1.1^{3,6}.1^{10,13}.0^{2,7}.0^{9,14}]-4-heptadecen, Bis(allyloxycarboxy)tricyclo[4.3.0.1^{2,5}]-decan, Bis(methacryloxy)tricyclo[4.3.0.1^{2,5}]-decan, Bis(acryloxy)tricyclo[4.3.0.1^{2,5}]-decan.

Die cycloolefinischen Polymere werden unter Verwendung von zumindest einer der zuvor beschriebenen cycloolefinischen Verbindungen, insbesondere der polycyclischen Kohlenwasserstoffverbindungen hergestellt.

Darüber hinaus können bei der Herstellung der cycloolefinischen Polymere weitere Olefine verwendet werden, die mit den zuvor genannten cycloolefinischen Monomeren copolymerisiert werden können. Hierzu gehören u.a. Ethylen, Propylen, Isopren, Butadien, Methylpenten, Styrol und Vinyltoluol.

Die meisten der zuvor genannten Olefine, insbesondere auch die Cycloolefine und Polycycloolefine, können kommerziell erhalten werden. Darüber hinaus sind viele cyclische und polycyclische Olefine durch Diels-Alder-Additionsreaktionen erhältlich.

Die Herstellung der cycloolefinischen Polymere kann auf bekannte Art und Weise erfolgen, wie dies u.a. in den japanischen Patentschriften 11818/1972, 43412/1983, 1442/1986 und 19761/1987 und den japanischen Offenlegungsschriften Nr. 75700/1975, 129434/1980, 127728/1983, 168708/1985, 271308/1986, 221118/1988 und 180976/1990 und in den Europäischen Patentanmeldungen EP-A-0 6 610 851, EP-A-0 6 485 893, EP-A-0 6 407 870 und EP-A-0 6 688 801 dargestellt ist.

Die cycloolefinischen Polymere können beispielsweise unter Verwendung von Aluminiumverbindungen, Vanadiumverbindungen, Wolframverbindungen oder Borverbindungen als Katalysator in einem Lösungsmittel polymerisiert werden.

Es wird angenommen, daß die Polymerisation je nach den Bedingungen, insbesondere dem eingesetzten Katalysator, unter Ringöffnung oder unter Öffnung der Doppelbindung erfolgen kann.

Darüber hinaus ist es möglich, cycloolefinische Polymere durch radikalische Polymerisation zu erhalten, wobei Licht oder ein Initiator als Radikalbildner verwendet wird. Dies gilt insbesondere für die Acryloylderivate der Cycloolefine und/oder Cycloalkane. Diese Art der Polymerisation kann sowohl in Lösung als auch in Substanz erfolgen.

Ein weiteres bevorzugtes Kunststoffsubstrat umfasst Poly(meth)acrylate. Diese Polymere werden im allgemeinen durch radikalische Polymerisation von Mischungen erhalten, die (Meth)acrylate enthalten. Der Ausdruck (Meth)acrylate umfasst Methacrylate und Acrylate sowie Mischungen aus beiden.

Diese Monomere sind weithin bekannt. Zu diesen gehören unter anderem (Meth)acrylate, die sich von gesättigten Alkoholen ableiten, wie beispielsweise Methyl(meth)acrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat; Aryl(meth)acrylate, wie Benzyl(meth)acrylat oder Phenyl(meth)acrylat, wobei die Arylreste jeweils unsubstituiert oder bis zu vierfach substituiert sein können; Cycloalkyl(meth)acrylate, wie 3-Vinylcyclohexyl(meth)acrylat, Bornyl(meth)acrylat; Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat; Glycoldi(meth)acrylate, wie 1,4-Butandioldi(meth)acrylat, (Meth)acrylate von Etheralkoholen, wie Tetrahydrofuryl(meth)acrylat, Vinyloxyethoxyethyl(meth)acrylat; Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol; schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; mehrwertige (Meth)acrylate, wie Trimethyloylpropantri(meth)acrylat, Pentaerythrittetra(meth)acrylat und Pentaerythrittri(meth)acrylat.

Gemäß einem bevorzugten Aspekt der vorliegenden Erfindung enthalten diese Mischungen mindestens 40 Gew.-%, vorzugsweise mindestens 60 Gew.-% und besonders bevorzugt mindestens 80 Gew.-%, bezogen auf das Gewicht der Monomere, Methylmethacrylat.

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind.

Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1;
Acrylnitril; Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstituenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und lsoprenylether;
Maleinsäurederivate, wie beispielsweise Maleinsäureanhydrid, Methylmaleinsäureanhydrid, Maleinimid, Methylmaleinimid; und
Diene, wie beispielsweise Divinylbenzol.

Im allgemeinen werden diese Comonomere in einer Menge von 0 bis 60 Gew.-%, vorzugsweise 0 bis 40 Gew.-% und besonders bevorzugt 0 bis 20 Gew.-%, bezogen auf das Gewicht der Monomeren, eingesetzt, wobei die Verbindungen einzeln oder als Mischung verwendet werden können.

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoylperoxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,01 bis 3 Gew.-%, vorzugsweise von 0,05 bis 1 Gew.-%, bezogen auf das Gewicht der Monomeren, eingesetzt.

Die zuvor genannten Polymere können einzeln oder als Mischung verwendet werden. Hierbei können auch verschiedene Polycarbonate, Poly(meth)acrylate oder cycloolefinische Polymere eingesetzt werden, die sich beispielsweise im Molekulargewicht oder in der Monomerzusammensetzung unterscheiden.

Die erfindungsgemäßen Kunststoffsubstrate können beispielsweise aus Formmassen der zuvor genannten Polymere hergestellt werden. Hierbei werden im allgemeinen thermoplastische Formgebungsverfahren eingesetzt, wie Extrusion oder Spritzguss.

Das Gewichtsmittel des Molekulargewichts M_{w} der erfindungsgemäß als Formmasse zur Herstellung der Kunststoffsubstrate zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne dass hierdurch eine Einschränkung erfolgen soll. Diese Größe kann beispielsweise mittels Gel-Permeations-Chromatographie bestimmt werden.

Des weiteren können die Kunststoffsubstrate durch Gusskammerverfahren erzeugt werden. Hierbei werden beispielsweise geeignete (Meth)acrylmischungen in einer Form gegeben und polymerisiert. Derartige (Meth)acrylmischungen weisen im allgemeinen die zuvor dargelegten (Meth)acrylate, insbesondere Methylmethacrylat auf. Des weiteren können die (Meth)acrylmischungen die zuvor dargelegten Copolymere sowie, insbesondere zur Einstellung der Viskosität, Polymere, insbesondere Poly(meth)acrylate, enthalten.

Das Gewichtsmittel des Molekulargewichts M_{w} der Polymere, die durch Gusskammerverfahren hergestellt werden, ist im allgemeinen höher als das Molekulargewicht von Polymeren, die in Formmassen verwendet werden. Hierdurch ergeben sich eine Reihe bekannter Vorteile, Im allgemeinen liegt das Gewichtsmittel des Molekulargewichts von Polymeren, die durch Gusskammerverfahren hergestellt werden im Bereich von 500 000 bis 10 000 000 g/mol, ohne dass hierdurch eine Beschränkung erfolgen soll.

Bevorzugte Kunststoffsubstrate, die nach dem Gusskammerverfahren hergestellt wurden, können von Röhm GmbH & Co. KG kommerziell unter dem Handelsnamen ®Plexiglas GS erhalten werden.

Darüber hinaus können die zur Herstellungen der Kunststoffsubstrate zu verwendenden Formmassen sowie die Acrylharze übliche Zusatzstoffe aller Art enthalten. Hierzu gehören unter anderem Antistatika, Antioxidantien, Entformungsmittel, Flammschutzmittel, Schmiermittel, Farbstoffe, Fliessverbesserungsmittel, Füllstoffe, Lichtstabilisatoren und organische Phosphorverbindungen, wie Phosphite, Phosphorinane, Phospholane oder Phosphonate, Pigmente, Verwitterungsschutzmittel und Weichmacher. Die Menge an Zusatzstoffen ist jedoch auf den Anwendungszweck beschränkt.

Besonders bevorzugte Formmassen, die Poly(meth)acrylate umfassen, sind unter dem Handelsnamen Acrylite® von der Fa. Cyros Inc. USA kommerziell erhältlich. Bevorzugte Formmassen, die cycloolefinische Polymere umfassen, können unter dem Handelsnamen ®Topas von Ticona und ®Zeonex von Nippon Zeon bezogen werden. Polycarbonat-Formmassen sind beispielsweise unter dem Handelsnamen ®Makrolon von Bayer oder ®Lexan von General Electric erhältlich.

Besonders bevorzugt umfasst das Kunststoffsubstrat mindestens 80 Gew.-%, insbesondere mindestens 90 Gew.-%, bezogen auf das Gesamtgewicht des Substrats, Poly(meth)acrylate, Polycarbonate und/oder cycloolefinische Polymere. Besonders bevorzugt bestehen die Kunststoffsubstrate aus Polymethylmethacrylat, wobei das Polymethylmethacrylat übliche Additive enthalten kann.

Gemäß einer bevorzugten Ausführungsform können Kunststoffsubstrate eine Schlagzähigkeit gemäß ISO 179/1 von mindestens 10 kJ/m², bevorzugt mindestens 15 kJ/m² aufweisen.

Die Form sowie die Größe des Kunststoffsubstrats sind nicht wesentlich für die vorliegende Erfindung. Im allgemeinen werden häufig platten- oder tafelförmige Substrate eingesetzt, die eine Dicke im Bereich von 1 mm bis 200 mm, insbesondere 5 bis 30 mm aufweisen.

Bevor die Kunststoffsubstrate mit einer Beschichtung versehen werden, können diese durch geeignete Methoden aktiviert werden, um die Haftung zu verbessern. Hierzu kann beispielsweise das Kunststoffsubstrat mit einem chemischen und/oder physikalischen Verfahren behandelt werden, wobei das jeweilige Verfahren vom Kunststoffsubstrat abhängig ist.

Die Kunststoffkörper der vorliegenden Erfindung werden zunächst mit einer haftvermittelnden, sich zwischen dem Kunststoffsubstrat und der anorganischen Beschichtung befindlichen Zwischenschicht (b) versehen.

Die wesentliche Eigenschaft der haftvermittelnden Schicht liegt darin, dass sie eine größere Haftfestigkeit sowohl zu der Kunststoffoberfläche als auch zu der wasserspreitenden Schicht besitzt als die letztere zu der Kunststoffoberfläche. Während es zahlreiche organische Polymerstoffe gibt, die an einer wasserabstoßenden Kunststoffoberfläche gut haften, bedarf es zu einer ausreichenden Haftung an der wasserspreitenden Schicht bestimmter Eigenschaften.

Diese Eigenschaften beruhen auf polare Gruppen aufweisende Polymere, die sich in der haftvermittelnden Schicht befinden, wobei die Polymere eine geringe Löslichkeit und geringe Quellbarkeit in Wasser zeigen, Im allgemeinen ist die Löslichkeit der Polymeren der Zwischenschicht geringer als 1 g/l.

Diese Polarität kann im allgemeinen durch polare Gruppen erzielt werden, die sowohl Bestandteil der Hauptkette und/oder von Seitenketten sein können.

So kann das Polymere durch Polyadditions- oder Polykondensationsreaktionen erhalten werden. Hierzu gehören beispielsweise Polyether, Polyester, Polycarbonate, Polyurethane, Epoxidharze und Polyamide.

Eine weitere Gruppe von als Polymer geeigneten Verbindungen sind Polyvinylverbindungen. Zu diesen gehören beispielsweise Polyolefine, wie Polypropylen, Polyethylen; Polyarylverbindungen, wie Polystyrol; Poly(meth)acrylate und Polyvinylacetate. Zur Herstellung dieser Polymere geeignete Vinylverbindungen wurden zuvor dargelegt.

Damit diese Polymeren die zuvor dargelegte haftvermittelnde Wirkung aufweisen, können diese Polymere polare Gruppen umfassen. Diese Gruppen können beispielsweise durch die Wahl von geeigneten Copolymeren in das Polymere eingebaut werden. Des weiteren können diese Gruppen auch durch Pfropfcopolymerisation auf ein Polymer gepfropft werden.

Als polare Gruppen sind besonders Hydroxyl-, Carboxyl-, Sulfonyl-, Carbonsäureamid, Nitril- und Silanol-Gruppen zu nennen. Sie sind vorzugsweise Bestandteil einer makromolekularen Verbindung, die gleichzeitig unpolare Gruppen enthält, wie Alkyl-, Alkylen-, Aryl- oder Arylengruppen.

Das Verhältnis von polaren zu unpolaren Gruppen der Polymeren muss so gewählt werden, dass Haftung sowohl zu der wasserabstoßenden, also unpolaren Kunststoffoberfläche als auch zu der wasserspreitenden, also hydrophilen Schicht erreicht wird. Die Polarität darf nicht so groß sein, dass das Material der haftvermittelnden Schicht selbst wasserlöslich oder wasserquellbar wäre. Die Quellung bei Sättigung mit Wasser bei 20° liegt nicht über 10 Vol-% und vorzugsweise nicht über 2 Vol-%.

Die Polarität der Polymeren soll jedoch auch nicht so niedrig sein, dass das Material in völlig unpolaren Lösungsmitteln, wie Benzin, löslich wäre. Die meisten geeigneten Materialien sind in begrenzt polaren organischen Lösungsmitteln löslich, wie Chlorkohlenwasserstoffen, Estern, Ketonen, Alkoholen oder Äthern oder deren Gemischen mit Aromaten.

Die erforderliche Ausgewogenheit der Affinitäten zu den beiden angrenzenden Schichten wird im allgemeinen erreicht, wenn das Material der haftvermittelnden Schicht 0,4 bis 100 Milliäquivalent polare Gruppen je 100 g des Polymermaterials enthält.

Die polaren Gruppen unterscheiden sich in ihrer polarisierenden Wirksamkeit. Diese nimmt in der Reihenfolge Nitril, Hydroxyl, prim. Carbonsäureamid, Carboxyl, Sulfonyl, Silanol zu. Je stärker die polarisierende Wirkung ist, umso geringer liegt der erforderliche Gehalt in dem Polymermaterial. Während von den schwach polaren Gruppen 4 bis 100 mÄquivalent polare Gruppen je 100g Polymermaterial verwendet werden, genügen 0,4 bis 20 mÄquivalent/100 g der stark polaren Gruppen- Wird der Gehalt an polaren Gruppen zu niedrig gewählt, so wird keine ausreichende Haftung der wasserspreitenden Schicht erreicht. Ist dagegen der Gehalt an polaren Gruppen zu hoch, steigt die Wasserquellbarkeit zu stark an, was wiederum die Haftung vermindert.

Die Polarität der durch Polykondensation oder Polyaddition erhaltenen Polymere, die Hydroxygruppen umfassen, kann unter anderem durch Umsetzung mit Silanen erhöht werden, die mindestens zwei hydrolysierbare Gruppen pro Siliciumatom aufweisen, wie Halogenatom, Alkoxygruppen und/oder Aryloxygruppen.

Zu diesen Verbindungen gehören unter anderem Tetraalkoxysilane, beispielsweise Tetramethoxysilan, Tetraethoxysilan; Trialkoxysilane, beispielsweise Methyl-trimethoxysilan, Methyl-triethoxysilan, Ethyl-trimethoxysilan, n-Propyl-trimethoxysilan, n-Propyl-triethoxysilan, i-Propyl-triethoxysilan; Dialkoxysilane beispielsweise Dimethyldimethoxysilan, Dimethyl-diethoxysilan, Diethyl-dimethoxysilan, Diethyl-diethoxysilan, Di-n-propyl-dimethoxysilan, Di-n-propyldiethoxysilan, Di-i-propyl-dimethoxysilan, Di-i-propyl-diethoxysilan.

Entsprechend den Polymeren, die durch Polykondensation oder Polyaddition erhältlich sind, können auch die Polymere modifiziert werden, die durch radikalische Polymerisation von Vinylverbindungen erhalten werden können.

Zur Modifikation dieser Polyvinylverbindungen können insbesondere Silane eingesetzt werden, die Vinylgruppen umfassen, die nicht hydrolysierbar sind. Zu den besonders geeigneten vinylischen Silanverbindungen gehören unter anderem CH₂=CH-Si(OCH₃)₃, CH₂=CH-Si(OC₂H₅)₃, CH₂=CH-SiCl₃, CH₂=CH-Si(CH₃)(OCH₃)₂, CH₂=CH-CO₂-C₃H₇Si(OCH₃)₃, CH₂=CH-CO₂-C₃H₇Si(OCH₃)₃, CH₂=C(CH₃)-CO₂-C₃H₇Si(OCH₃)₃, CH₂=C(CH₃)-CO₂-C₃H₇Si(OC₂H₅)₃ und CH₂=C(CH₃)-CO₂-C₃H₇-SiCl₃.

Darüber hinaus sind Polymere bevorzugt, die Gruppen aufweisen, die bei und/oder nach der Bildung der Zwischenschicht (b) zu einer Vernetzung führen. Hierzu sind insbesondere Silane mit 3 hydrolysierbaren Gruppen sowie einer vinylischen Gruppe geeignet, wobei Beispiele für diese Silane zuvor dargelegt wurden.

Die polaren Polymere können einzeln oder als Mischung in der haftvermittelnden Zwischenschicht (b) vorhanden sein.

Des weiteren kann die Zwischenschicht (b) übliche Additive und Zusatzstoffe enthalten. Hierzu gehören insbesondere Verlaufshilfsmittel, die auch Tenside umfassen.

Gemäß einem besonderen Aspekt der vorliegenden Erfindung wird die Zwischenschicht durch Auftragen aus einer Lösung erhalten wird, die ein Lösungsmittel mit einer Verdunstungszahl kleiner oder gleich 20, vorzugsweise kleiner oder gleich 15 aufweist.

Die Verdunstungszahl (VD) ist das Verhältnis aus der für die zu prüfende Flüssigkeit gemessenen Verdunstungszeit und der Verdunstungszeit für Diethylether (C₂H₅OC₂H₅) als Vergleichsflüssigkeit, wobei die Meßbedingungen in DIN 53 170 beschrieben sind.

Hierdurch können thermisch umformbare Kunststoffkörper erhalten werden, falls die Schichtdicken der Beschichtungen (a) und (b) insgesamt höchsten 700 nm beträgt.

Derartige Verbindungen sind allgemein bekannt und kommerziell erhältlich. Vorzugsweise werden Carbonsäureester eingesetzt, wobei insbesondere Ethylacetat, Propylacetat und Butylacetat besonders bevorzugt sind.

Gemäß einem besonderen Aspekt der vorliegenden Erfindung wird die Zwischenschicht (b) aus einer Lösung aufgetragen, die mindestens 70 Gew.-%, vorzugsweise mindestens 90 Gew.-% einem oder mehreren Lösungsmittel mit einer Verdunstungszahl kleiner oder gleich 20 umfasst.

Gemäß einem besonderen Aspekt der vorliegenden Erfindung tritt beim Kontakt des Kunststoffsubstrats mit der Verbindungen mit einer Verdunstungszahl kleiner oder gleich 20 eine Erweichung des Substrats ein. Diese weichmachende Wirkung der Verbindung mit einer Verdunstungszahl kleiner oder gleich 20 kann über eine Zunahme des Haze-Wertes gemäß Taber-Test (DIN 52347) nach 10 Umdrehungen bestimmt werden. Der Test gemäß DIN 52347 wird bei einer Auflagekraft von 5,4 N durchgeführt, wobei die Reibräder "CS10F" der Firma Teledyne Taber verwendet werden. Der Haze-Wert wird gemäß Abschnitt 5.3.1. Versuchsanordnung A bestimmt. Hierzu wird das Kunststoffsubstrat für 60 Minuten in ein entsprechendes Lösungsmittel getaucht. Bevorzugte Verbindungen mit einer Verdunstungszahl kleiner oder gleich 20 zeigen im anschließenden Taber-Test nach 10 Umdrehungen des Reibrades einen Delta-Haze von mindestens 4%, vorzugsweise mindestens 6% und besonders bevorzugt 6,8% auf. Bevorzugtes Substrat ist hierbei insbesondere PMMA.

Gemäß einer weiteren bevorzugten Ausführungsform wird das Kunststoffsubstrat beim Auftragen der Zwischenschicht jedoch nicht trüb. Dementsprechend sollte die Verbindung mit einer Verdunstungszahl kleiner oder gleich 20 eine möglichst hohe maximale Einwirkzeit aufweisen, wobei die maximale Einwirkzeit durch die Zeitspanne gegeben ist, innerhalb der keine Trübungen des Kunststoffsubstrats durch Kontakt der Verbindungen mit einer Verdunstungszahl kleiner oder gleich 20 auftreten. Die Grenze dieser Einwirkzeit kann über einfache Vorversuche ermittelt werden, wobei die Zeit gemessen wird bis eine sichtbare Trübung des Kunststoffsubstrat durch die Einwirkung der Verbindung mit einer Verdunstungszahl kleiner oder gleich 20 auftritt. Die durch den Kontakt Verbindungen mit einer Verdunstungszahl kleiner oder gleich 20 auftretende Trübung kann über eine Zunahme des Haze-Wertes von 20% bestimmt werden, wobei Methoden zur Bestimmung der Trübung in DIN 52347, insbesondere Abschnitt 5.3.1. Versuchsanordnung A dargelegt sind. Vorzugsweise beträgt diese Einwirkzeit mindestens 60 Minuten, vorzugsweise mindestens 240 Minuten.

Die zuvor dargelegten Beschichtungsmischungen können mit jeder bekannten Methode auf die Kunststoffsubstrate aufgebracht werden. Hierzu gehören unter anderem Tauchverfahren, Sprühverfahren, Rakeln, Flutbeschichtungen und Rollen- oder Walzenauftrag. Hiervon ist das Fluten besonders bevorzugt.

Die Flutbeschichtungsverfahren sind dem Fachmann bekannt. Im allgemeinen wird eine Flüssigkeit über das Material gegossen. Hierbei ist der Druck im allgemeinen so niedrig, dass die auf das Substrat auftreffende Flüssigkeit keine Tröpfchen erzeugt. Überschüssiges Beschichtungsmittel wird in einer Wanne aufgefangen und ggf. über Filter erneut aufgetragen. Im allgemeinen erfolgt der Auftrag über Düsen, wobei jedoch der Druck relativ gering gewählt wird. Diese Düsen werden über mechanische Einrichtungen über die Platte oder am Rand der Platte entlang geführt, so dass die mit sehr geringem Druck aufgetragene Flüssigkeit einen Flutvorhang erzeugt, der das Substrat gleichmäßig beschichtet. Die Flüssigkeitsmenge sowie der Vorschub, mit dem der Strahl über das Substrat geführt werden, sind so gewählt, dass die Beschichtung gleichmässig aufgetragen wird. Nähere Ausführungen hierzu finden sich in Brock/ Groteklaes/ Mischke "Lehrbuch der Lacktechnologie", 2. Auflage, 1998, Vincentz Verlag.

Die zum Fluten verwendeten Beschichtungsmittel enthalten im allgemeinen einen Feststoffgehalt im Bereich von 0,01 bis 5 Gew.-%, vorzugsweise im Bereich von 0,1 bis 3 Gew.-%, um eine geringe Schichtdicke zu erzielen.

Die so aufgetragenen Beschichtungen lassen sich im allgemeinen in relativ kurzer Zeit, beispielsweise innerhalb 1 Minute bis 1 Stunde, in der Regel innerhalb ca. 3 Minuten bis 30 Minuten, vorzugsweise innerhalb von ca. 5 Minuten bis 20 Minuten und bei vergleichsweise niedriger Temperatur, beispielsweise bei 70 - 110°C, vorzugsweise bei ca. 80°C härten bzw. trocknen.

Die Schichtdicke der Zwischenschicht ist nicht besonders kritisch. Aus wirtschaftlichen Gründen wird diese jedoch nach Möglichkeit relativ gering gewählt, wobei sich die untere Grenze aus der Stabilität der gesamten Beschichtung (a) und (b) ergibt. Im allgemeinen liegt die Dicke der haftvermittelnden Zwischenschicht nach der Härtung aber in einem Bereich von 0,05 µm bis 10 µm, bevorzugt 0,1 µm bis 2 µm und besonders bevorzugt 0,2 µm bis 1 µm, ohne dass hierdurch eine Beschränkung erfolgen soll. Werden thermisch umformbare Kunststoffkörper hergestellt, so liegt die Dicke der Zwischenschicht vorzugsweise im Bereich von 50 nm bis 400 nm, bevorzugt 100 nm bis 200 nm, ohne dass hierdurch eine Beschränkung erfolgen soll. Die Schichtdicken der Beschichtungen (a) und/oder (b) kann durch eine Aufnahme eines Transmissionselektronen-Mikroskops (TEM) bestimmt werden, wobei im allgemeinen der Mittelwert über das Integral der Schichtfläche bestimmt wird.

Nach dem Trocknen der haftvermittelnden Zwischenschicht (b) wird hierauf eine wasserspreitende anorganische Beschichtung (a) aufgebracht.

Der Begriff wasserspreitend bedeutet, dass ein Wassertropfen auf der Oberfläche einen Randwinkel von höchstens 20°, vorzugsweise höchstens 10° bildet. Diese Größe wird bei 20°C mit einem Kontaktwinkelmesssystem G40 der Fa. Krüss, Hamburg bestimmt.

Im Rahmen der vorliegenden Erfindung bedeutet der Begriff anorganisch, dass der Kohlenstoffanteil der anorganischen Beschichtung maximal 25 Gew.-%, vorzugsweise maximal 17 Gew.-% und ganz besonders bevorzugt maximal 10 Gew.-%, bezogen auf das Gewicht der anorganischen Beschichtung (a), beträgt. Diese Größe kann mittels Elementaranalyse bestimmt werden.

Als anorganische Beschichtung können insbesondere Polysiloxane, Silancokondensate und Kieselsole aufgebracht werden, wobei deren Kohlenstoffanteil auf die zuvor dargelegten Bereiche beschränkt ist.

Silancokondensate, die zur Herstellung der Beschichtung (a) dienen können, sind an sich bekannt und werden zur Ausrüstung von polymeren Verglasungsmaterialien eingesetzt. Sie zeichnen sich aufgrund ihres anorganischen Charakters durch gute Beständigkeit gegenüber UV-Strahlung und Witterungseinflüssen aus.

Diese Silancokondensate können unter anderem durch Kondensation oder Hydrolyse von organischen Siliciumverbindungen der allgemeinen Formel (I)

R¹ ₙSiX₄₋ₙ (I),

worin R¹ eine 1 bis 20 Kohlenstoffatome aufweisende Gruppe, X ein Alkoxyrest mit 1 bis 20 Kohlenstoffatomen oder ein Halogen und n eine ganze Zahl von 0 bis 3, vorzugsweise 0 oder 1 darstellt, wobei verschiedene Reste X oder R¹ jeweils gleich oder unterschiedlich sein können, erhalten werden.

Der Ausdruck "eine 1 bis 20 Kohlenstoffatome aufweisende Gruppe" kennzeichnet Reste organischer Verbindungen mit 1 bis 20 Kohlenstoffatomen. Er umfasst Alkyl-, Cycloalkyl-, aromatische Gruppen, Alkenylgruppen und Alkinylgruppen mit 1 bis 20 Kohlenstoffatomen, sowie heteroalipatische und heteroaromatische Gruppen, die neben Kohlenstoff- und Wasserstoffatomen insbesondere Sauerstoff-, Stickstoff-, Schwefel- und Phosphoratome aufweisen. Dabei können die genannten Gruppen verzweigt oder nicht verzweigt sein, wobei der Rest R¹ substituiert oder unsubstituiert sein kann. Zu den Substituenten gehören insbesondere Halogene, 1 bis 20 Kohlenstoffatome aufweisende Gruppen, Nitro-, Sulfonsäure-, Alkoxy-, Cycloalkoxy-, Alkanoyl-, Alkoxycarbonyl-, Sulfonsäureester-, Sulfinsäure-, Sulfinsäureester-, Thiol-, Cyanid-, Epoxy-, (Meth)acryloyl-, Amino- und Hydroxygruppen. Im Rahmen der vorliegenden Erfindung bezeichnet der Ausdruck "Halogen" ein Fluor-, Chlor-, Brom- oder lodatom.

Zu den bevorzugten Alkylgruppen gehören die Methyl-, Ethyl-, Propyl-, Isopropyl-, 1-Butyl-, 2-Butyl-, 2-Methylpropyl-, tert.-Butyl-, Pentyl- und die 2-Methylbutyl-Gruppe.

Zu den bevorzugten Cycloalkylgruppen gehören die Cyclopropyl-, Cyclobutyl-, Cyclopentyl-, Cyclohexyl-, Cycloheptyl- und die Cyclooctyl-Gruppe, die gegebenenfalls mit verzweigten oder nicht verzweigten Alkylgruppen substituiert sind.

Zu den bevorzugten Alkoxygruppen gehören die Methoxy-, Ethoxy-, Propoxy-, Butoxy-, tert.-Butoxy-, Hexyloxy-, 2-Methylhexyloxy-, Decyloxy- oder Dodecyloxy-Gruppe.

Zu den bevorzugten Cycloalkoxygruppen gehören Cycloalkoxygruppen, deren Kohlenwasserstoffrest eine der vorstehend genannten bevorzugten Cycloalkylgruppen ist.

Ganz besonders bevorzugt stellt der Rest R¹ eine Methyl- oder Ethylgruppe dar.

Hinsichtlich der Definition der Gruppe X in Formel (I) bezüglich der Alkoxygruppe mit 1 bis 20 Kohlenstoffatome sowie des Halogens sei auf die zuvor genannte Definition verwiesen. Bevorzugt stellt die Gruppe X ein Methoxy- oder Ethoxyrest oder ein Brom- oder Chloratom dar.

Diese Verbindungen können einzeln oder als Mischung verwendet werden, um Silancokondensate herzustellen.

Bevorzugt weisen mindestens 80 Gew.-%, insbesondere mindestens 90 Gew.-% der eingesetzten Silanverbindungen vier Alkoxygruppen oder Halogenatome auf, bezogen auf das Gewicht der kondensierbaren Silane.

Tetraalkoxysilane umfassen Tetramethoxysilan, Tetraethoxysilan, Tetra-n-propoxysilan, Tetra-i-propoxysilan und Tetra-n-butoxysilane.

Besonders bevorzugt sind Tetramethoxysilan und Tetraethoxysilan. Gemäß einem besonderen Aspekt der vorliegenden Erfindung beträgt der Anteil dieser besonders bevorzugten Tetraalkoxysilanen mindestens 80 Gew.-%, insbesondere mindestens 90 Gew.-%, bezogen auf das Gewicht der eingesetzten Silanverbindungen.

Gemäß einem weiteren Aspekt der vorliegenden Erfindung können auch Silankondensate eingesetzt werden, die kolloidal gelöste SiO₂-Partikel enthalten. Derartige Lösungen können nach dem Sol-Gel-Verfahren erhalten werden, wobei insbesondere Tetraalkoxysilane und/oder Tetrahalogensilane kondensiert werden.

Üblich werden aus den zuvor genannten Silanverbindungen wasserhaltige Beschichtungsmittel dargestellt, indem man siliciumorganischen Verbindungen, mit einer zur Hydrolyse ausreichenden Menge Wasser, d.h. >, 0,5 Mol Wasser pro Mol der zur Hydrolyse vorgesehenen Gruppen, wie z.B. Alkoxygruppen hydrolysiert, vorzugsweise unter Säurekatalyse. Als Säuren können z.B. anorganische Säuren, wie Salzsäure, Schwefelsäure, Phosphorsäue, Salpetersäure usw., oder organische Säuren, wie Carbonsäuren, organische Sulfonsäuren usw., oder saure Ionenaustauscher zugesetzt werden, wobei der pH der Hydrolysereaktion in der Regel zwischen 2 und 4,5, vorzugsweise bei 3 liegt.

Im allgemeinen zeigt sich nach dem Zusammengeben der Reaktionspartner ein Temperaturanstieg. In gewissen Fällen kann es notwendig werden, zum Start der Reaktion von außen Wärme zuzuführen, beispielsweise durch Erwärmen des Ansatzes auf 40 - 50°C. Im allgemeinen wird darauf geachtet, dass die Reaktionstemperatur 55°C nicht überschreitet. Die Reaktionsdauer ist in der Regel relativ kurz, sie liegt üblich unter einer Stunde, beispielsweise bei 45 min.

Die Silanverbindungen können zu Polymeren kondensiert werden, die im allgemeinen ein Gewichtsmittel des Molekulargewichts M_{w} im Bereich von 100 bis 20000, bevorzugt 200 bis 10000 und besonders bevorzugt 500 bis 1500 g/Mol aufweisen. Diese Molmasse kann beispielsweise durch NMR-Spektroskopie bestimmt werden.

Die Kondensationsreaktion kann beispielsweise durch Kühlen auf Temperaturen unter 0°C oder durch Erhöhen des pH-Wertes mit geeigneten Basen, beispielsweise organische Basen, wie Amine, Alkali- oder Erdalkalihydroxiden, abgebrochen werden.

Zur weiteren Bearbeitung kann ein Teil des Wasser-Alkoholgemisches und der flüchtigen Säuren aus der Reaktionsmischung abgetrennt werden, beispielsweise durch Destillation.

Die erfindungsgemäß einsetzbaren Silancokondensate können Härtungskatalysatoren, beispielsweise in Form von Zinkverbindungen und/oder anderer Metallverbindungen, wie Kobalt-, Kupfer- oder Calciumverbindungen, insbesondere deren Octoate oder Naphthenate, enthalten. Der Anteil der Härtungskatalysatoren beträgt in der Regel 0,1 - 2,5 Gew.-%, speziell 0,2 - 2 Gew.-%, bezogen auf das gesamte Silancokondensat, ohne dass hierdurch eine Beschränkung erfolgen soll. Besonders genannt seien beispielsweise Zinknaphthenat, -octoat, -acetat, -sulfat usw.

Des weiteren können auch Oxidschichten, insbesondere Halbmetall und Metalloxide als wasserspreitende Beschichtung (a) eingesetzt werden. Zu den geeigneten Verbindungen gehören insbesondere Oxide und Hydroxide, die sich von Silicium, Aluminium, Titan, Zirkon, Zink und/oder Chrom ableiten.

Diese Oxide können einzeln oder als Mischungen, beispielsweise als Mischoxide verwendet werden. Die Löslichkeit dieser Oxide und/oder Hydroxide in Wasser sollte möglichst gering sein, beispielsweise sollte die Löslichkeit in Wasser bei 20° unter 1000 µg/l, vorzugsweise unter 200 µg/l liegen.

Diese Oxide können beispielsweise in Form von kolloidalen Lösungen aufgebracht werden, die durch Hydrolyse von Alkoxyverbindungen gewonnen werden. Derartige kolloidale Lösungen sind beispielsweise aus EP-A-0 149 182, EP-A-0 826 663, EP-A-0 850 203 und EP-1 022 318 bekannt.

Die Teilchengrösse dieser Oxid-Partikel ist unkritisch, wobei jedoch die Transparenz von der Partikelgröße abhängig ist. Bevorzugt weisen die Partikel höchstens eine Größe von 300 nm auf, wobei sie insbesondere in einem Bereich von 1 bis 200 nm, bevorzugt 1 bis 50 nm liegen.

Gemäß einem besonderen Aspekt der vorliegenden Erfindung wird die kolloidale Lösung vorzugsweise bei einem pH-Wert größer oder gleich 7,5, insbesondere größer oder gleich 8 und besonders bevorzugt größer oder gleich 9 aufgetragen.

Basische kolloidale Lösungen sind preiswerter als saure Lösungen. Darüber hinaus sind basische kolloidale Lösungen von Oxid-Partikel besonders einfach und über eine lange Zeit lagerfähig.

Die zuvor beschriebenen Beschichtungsmittel können kommerziell unter dem Handelsnamen ®Ludox (Fa. Grace, Worms); ®Levasil (Fa. Bayer, Leverkusen); ® Klebosol, (Fa. Clariant) erhalten werden.

Des weiteren können die Beschichtungsmittel zur Herstellung der anorganischen Beschichtung (a) übliche Additive und Verarbeitungshilfsmittel enthalten. Zu diesen gehören unter anderem insbesondere Verlaufshilfsmittel, die auch Tenside umfassen.

Die zuvor dargelegten Beschichtungsmittel zur Herstellung der anorganischen Beschichtung (a) werden mit Flutverfahren auf die Kunststoffsubstrate aufgebracht.

Gemäß einer besonderen Ausführungsform der vorliegenden Erfindung werden Kunststoffsubstrate, die eine Zwischenschicht (b) aufweisen, über eine besonders lange Flutstrecke beschichtet. So sind erfindungsgemäß Flutstrecken von mindestens 1 m, vorzugsweise mindestens 2 m und besonders bevorzugt mindestens 3 m möglich, ohne dass hierdurch eine Beschränkung erfolgen soll. Hierbei ist das Verhältnis von Schichtdicke der Beschichtung (a) am unteren Rand des Kunststoffsubstrats zur Schichtdicke am oberen Rand des Kunststoffsubstrats höchstens 3, vorzugsweise höchstens 2,5, wobei die Schichtdicken nach dem Trocknen der Beschichtung bestimmt werden.

Verlaufshilfsmittel mit mindestens einer anionischen Gruppe eingesetzt, die eine hohe Mischbarbeit mit Wasser aufweisen. So sind bei 20°C insbesondere mindestens 10 g, vorzugsweise mindestens 50g und besonders bevorzugt mindestens 150g in 1000g Wasser löslich, ohne dass eine Phasenbildung, insbesondere eine Micellenbildung eintritt.

Verlaufshilfsmittel sind im Rahmen der vorliegenden Erfindung Verbindungen, die die Oberflächenenergie von Wasser herabsetzen. Gemäß einem besonderen Aspekt der vorliegenden Erfindung zeigt eine wäßrige Mischung, die 0,1 Gew.-% Verlaufshilfsmittel und Wasser umfasst, bei 20°C eine Oberflächenspannung, die um mindestens 5 mN/m, vorzugsweise um mindestens 10 mN/m und besonders bevorzugt um mindestens 15 mN/m unter der Oberflächenspannung von reinem Wasser liegt. Die Oberflächenspannung kann mit dem Krüss Interfacial-Tensiometer K8600 E/E nach Lecompte du Noüy gemäß DIN 53914 ermittelt werden.

Verlaufshilfsmittel mit mindestens einer anionischen Gruppe sind in der Fachwelt bekannt, wobei diese Verlaufshilfsmittel im allgemeinen Carboxy-, Sulfonat- und/oder Sulfatgruppen aufweisen. Vorzugsweise umfassen diese Verlaufshilfsmittel mindestens eine Sulfonatgruppe. Verlaufshilfsmittel mit mindestens einer anionischen Gruppe umfassen anionische Verlaufshilfmittel und amphotere Verlaufshilfsmittel, die neben einer anionischen Gruppe auch eine kationische Gruppe umfassen. Hiervon sind anionische Verlaufshilfsmittel bevorzugt. Mit anionischen Verlaufshilfmitteln ist insbesondere die Herstellung von umformbaren Kunststoffkörpern möglich.

Vorzugsweise umfassen die Verlaufshilfsmittel mit mindestens einer anionischen Gruppe 2 bis 20, besonders bevorzugt 2 bis 10 Kohlenstoffatome, wobei der organische Rest sowohl aliphatische als auch aromatische Gruppen enthalten kann. Gemäß einem besonderen Aspekt der vorliegenden Erfindung werden anionische Verlaufshilfsmittel eingesetzt, die einen Alkyl- oder einen Cycloalkylrest mit 2 bis 10 Kohlenstoffatome umfassen.

Die Verlaufshilfsmittel mit mindestens einer anionischen Gruppe können weitere polare Gruppen, beispielsweise Carboxy-, Thiocarboxy- oder lmino-, Carbonsäureester-, Kohlensäureester-, Thiocarbonsäureester, Dithiocarbosäureester- Thiokohlensäureester-, Dithiokohlensäureester- und/oder Dithiokohlensäureamidgruppen aufweisen.

Besonders bevorzugt werden Verlaufshilfsmittel der Formel (II) eingesetzt 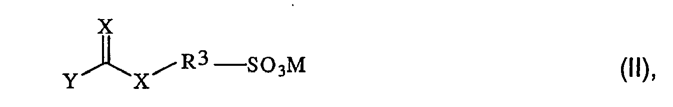 worin X unabhängig ein Sauerstoff oder ein Schwefelatom, Y eine Gruppe der Formel OR², SR² oder NR², worin R² unabhängig eine Alkylgruppe mit 1 bis 5, vorzugsweise 1 bis 3 Kohlenstoffatomen und R³ eine Alkylengruppe mit 1 bis 10, vorzugsweise 2 bis 4 Kohlenstoffatomen und M ein Kation, insbesondere ein Alkalimetallion, insbesondere Kalium oder Natrium, oder ein Ammoniumion darstellt. Mit diesen Verbindungen sind insbesondere Kunststoffkörper erhältlich, die besonders gut umgeformt werden können.

Die Zugabe an Verlaufshilfsmittel mit mindestens einer anionischen Gruppe ist auf eine Menge beschränkt, die im wesentlichen keine nachteilige Wirkung auf die wasserspreitende Beschichtung zeigt. Im allgemeinen wird der Beschichtungszusammensetzung 0,01 bis 1 Gew.-, insbesondere 0,03 bis 0,1 Gew.-% eines oder mehrerer Verlaufshilfsmittel mit mindestens einer anionischen Gruppe zugegeben, bezogen auf das Gesamtgewicht der Beschichtungszusammensetzung.

Derartige Verbindungen können insbesondere von Raschig AG unter dem Handelsnamen Raschig OPX oder Raschig DPS erhalten werden.

Neben dem Verlaufshilfsmittel mit anionischen Gruppen kann die Beschichtungszusammensetzung weitere Verlaufshilfsmittel, insbesondere nichtionische Verlaufshilfsmittel umfassen. Hiervon sind insbesondere Ethoxylate bevorzugt, wobei insbesondere Ester sowie Alkohole und Phenole mit Ethoxygruppen eingesetzt werden können. Hierzu gehören unter anderem Nonylphenolethoxylate.

Die Ethoxylate umfassen insbesondere 1 bis 20, insbesondere 2 bis 8 Ethoxygruppen. Der hydrophobe Rest der ethoxylierten Alkohole und Ester umfasst vorzugsweise 1 bis 40, vorzugsweise 4 bis 22 Kohlenstoffatome, wobei sowohl lineare als auch verzweigte Alkohol- und/oder Esterreste eingesetzt werden können.

Derartige Produkte können kommerziell beispielsweise unter dem Handelsnamen ®Genapol X80 erhalten werden.

Die Zugabe an nichtionischem Verlaufshilfsmittel ist auf eine Menge beschränkt, die im wesentlichen keine nachteilige Wirkung auf die wasserspreitende Beschichtung zeigt. Im allgemeinen wird der Beschichtungszusammensetzung 0,01 bis 2 Gew.-, insbesondere 0,1 bis 1 Gew.-% eines oder mehrerer nichtionischer Verlaufshilfsmittel zugegeben, bezogen auf das Gesamtgewicht der Beschichtungszusammensetzung.

Werden der Beschichtungszusammensetzung zur Herstellung der anorganischen Beschichtung sowohl ein Verlaufshilfsmittel mit mindestens einer anionischen Gruppe als auch ein nichtionisches Verlaufshilfsmittel zugegeben, so liegt das Gewichtsverhältnis von anionischem Verlaufshilfsmittel zu nichtionischem Verlaufshilfsmittel vorzugsweise im Bereich von 0,01:1 bis 1:1, besonders bevorzugt 0,05:1 bis 0,3:1.

Die so aufgetragenen Lacke lassen sich im allgemeinen in relativ kurzer Zeit, beispielsweise innerhalb 0,5 Minute bis 1 Stunde, in der Regel innerhalb ca. 1 Minuten bis 30 Minuten, vorzugsweise innerhalb von 3 Minuten bis 20 Minuten und bei vergleichsweise niedriger Temperatur, beispielsweise bei 60 - 110°C, vorzugsweise bei ca. 80°C zu hervorragend haftfesten Beschichtungen aushärten.

Die Schichtdicke der anorganischen Beschichtung (a) ist relativ unkritisch. Im allgemeinen liegt diese Größe nach der Härtung aber in einem Bereich von 0,05 µm bis 2 µm, bevorzugt 0,05 µm bis 1 µm und besonders bevorzugt 0,05 µm bis 0,5 µm, ohne dass hierdurch eine Beschränkung erfolgen soll. Werden thermisch umformbare Kunststoffkörper hergestellt, so liegt die Dicke der anorganischen Beschichtung vorzugsweise im Bereich von 50 nm bis 600 nm, bevorzugt 100 nm bis 400 nm und besonders bevorzugt 150 nm bis 250 nm.

Die Kunststoffkörper der vorliegenden Erfindung lassen sich hervorragend thermisch umformen, ohne dass hierdurch deren wasserspreitende Beschichtung beschädigt werden würde, falls die Summe der Schichtdicken der anorganische Beschichtung (a) und der Zwischenschicht (b) höchstens 700 nm beträgt, wobei dieser Wert vorzugsweise im Bereich von 100 bis 500 nm liegt.

Das Umformen ist dem Fachmann bekannt. Hierbei wird der Kunststoffkörper erhitzt und über eine geeignete Schablone umgeformt. Die Temperatur, bei der die Umformung stattfindet ist abhängig von der Erweichungstemperatur des Substrats, aus dem der Kunststoffkörper hergestellt wurde. Die weiteren Parameter, wie beispielsweise die Umformgeschwindigkeit und Umformkraft sind ebenfalls vom Kunststoff abhängig, wobei diese Parameter dem Fachmann bekannt sind. Von den Umformverfahren sind insbesondere Biegeumformverfahren bevorzugt. Derartige Verfahren werden insbesondere zur Verarbeitung von Gussglas eingesetzt. Nähere Ausführungen finden sich in "Acrylglas und Polycarbonat richtig Be- und Verarbeiten" von H.Kaufmann et al. herausgegeben vom Technologie-Transfer-Ring Handwerk NRW und in VDI-Richtlinie 2008 Blatt 1 sowie DIN 8580/9/.

Die mit einer wasserspreitenden Beschichtung versehenen Kunststoffkörper der vorliegenden Erfindung zeigen eine hohe Scheuerfestigkeit. Bevorzugt ist die Scheuerfestigkeit gemäß DIN 53778 größer oder gleich 3 000 Zyklen, insbesondere größer oder gleich 5 000 Zyklen und besonders bevorzugt größer oder gleich 10 000 Zyklen.

Gemäß einem besonderen Aspekt der vorliegenden Erfindung ist der Kunststoffkörper transparent, wobei die Transparenz τ_{D65/10} gemäß DIN 5033 mindestens 70%, bevorzugt mindestens 75% beträgt.

Bevorzugt weist der Kunststoffkörper einen E-Modul nach ISO 527-2 von mindestens 1000 MPa, insbesondere mindestens 1500 MPa auf, ohne dass hierdurch eine Beschränkung erfolgen soll.

Die erfindungsgemäßen Kunststoffkörper sind im allgemeinen sehr beständig gegenüber Bewitterung. So ist die Bewitterungsbeständigkeit gemäß DIN 53387 (Xenotest) mindestens 5000 Stunden.

Auch nach einer langen UV-Bestrahlung von mehr als 5000 Stunden ist der Gelbindex gemäß DIN 6167 (D65/10) von bevorzugten Kunststoffkörpern kleiner oder gleich 8, bevorzugt kleiner oder gleich 5, ohne dass hierdurch eine Beschränkung erfolgen soll.

Die Kunststoffkörper der vorliegenden Erfindung können beispielsweise im Baubereich, insbesondere zur Herstellung von Gewächshäusern oder Wintergärten, oder als Lärmschutzwand dienen.

Nachfolgend wird die Erfindung durch Beispiele und Vergleichsbeispiele eingehender erläutert, ohne dass die Erfindung auf diese Beispiele beschränkt werden soll.

### Beispiel 1

### Herstellung der haftvermittelnden Zwischenschicht

Ein Copolymer aus 87,6 % Methylmethacrylat und 12,4 % gamma-Methacryloyloxy-propyl-trimethoxysilan in Butylacetat gelöst, wobei der Feststoffgehalt 0,7 Gew.-% betrug, und durch Fluten in einer dünnen Schicht auf PMMA-Platten über eine Länge von 3m aufgetragen. Nach dem Abtropfen wird die beschichtete Platte 20 min bei 80°C im Umluftofen getrocknet.

### Herstellung der wasserspreitenden Schicht

25 Gewichtsteile eines anionischen Kieselsols (Feststoffgehalt 30 %; ®Levasil erhältlich von Bayer AG) werden mit 0,05 Gewichtsteile (O-Ethyldithiokohlensäure-(3-sulfopropyl)-ester, Kaliumsalz; ®Raschig OPX erhältlich von Raschig AG) und 0,4 Gewichtsteile eines ethoxylierten Fettsäurealkohols (®Genapol X80) mit vollentsalztem Wasser zu 100 Gewichtsteilen ergänzt, mit NaOH auf einen pH-Wert von 9,5 eingestellt und durch Fluten in dünner Schicht auf die mit der haftvermittelnden Schicht versehene Platte beschichtet. Die Flutweglänge betrug 3m (Plattenlänge), die Vorschubgeschwindigkeit der Flutdüse 0,75 m/min betrug. Die Benetzung und der Verlauf des Beschichtungsmittels waren sehr gut

Nach dem Ablüften wird die mit haftvermittelnder Schicht und wasserspreitender Schicht versehene Platte 20 min bei 80°C im Umlufttrockenschrank getrocknet.

Die Bestimmung der Schichtdicke der extrem dünnen Schichten kann mittels Dünnschnitt im Transmissionselektronenmikroskop erfolgen. Die Dicke der Zwischenschicht betrug in Abhängigkeit von der Flutrichtung im Bereich von 140 bis 220 nm die der anorganischen Beschichtung 170 bis 270 nm.

Die Bestimmung der Haftung der Beschichtung wurde gemäß dem Nassscheuertest nach DIN 53778 mit einem Nassscheuertestgerät der Fa. Gardner, Modell M 105/A durchgeführt. Es wurde ein Wert von 10000 Zyklen bei einer Schichtdicke von insgesamt 310 nm bestimmt (oberer Bereich der beschichteten Platte, in Flutrichtung gesehen). Bei einer Schichtdicke von insgesamt 490 nm wurde ein Wert von 17000 Zyklen bestimmt (unterer Bereich der Platte)

Der Kontaktwinkel mit Wasser bei 20°C wurde mit einem Kontaktwinkelmesssystem G40 der Fa. Krüss, Hamburg bestimmt. Dieser Winkel betrug < 5°.

Die Platte zeigte gute optische Eigenschaften.

### Vergleichsbeispiel 1

Das Beispiel 1 wurde im wesentlichen wiederholt, wobei jedoch die anorganische Schicht aus einer Mischung durch Fluten aufgetragen wurde, die kein Raschig OPX enthielt.

Die Benetzung der PMMA-Platte durch das anorganische Beschichtungsmittel war schlecht, wobei keine einheitliche Schicht erzielt wurde.

### Vergleichsbeispiel 2

Das Beispiel 1 wurde im wesentlichen wiederholt, wobei jedoch die anorganische Schicht aus einer Mischung durch Fluten aufgetragen wurde, die kein Raschig OPX enthielt. Allerdings war der Gehalt an ethoxyliertem Fettsäurealkohol (®Genapol X80) auf 0,8 Gewichtsteile erhöht.

Der Verlauf des anorganischen Beschichtungsmittels war gut, wobei jedoch die Haftung der Beschichtung auf dem Substrat unzureichend war.

### Vergleichsbeispiel 3

Das Beispiel 1 wurde im wesentlichen wiederholt, wobei jedoch die anorganische Schicht aus einer Mischung durch Fluten aufgetragen wurde, die kein Raschig OPX enthielt. Allerdings wurden 0,05 Gewichtsteile eines nichtionischen Verlaufshilfsmittels (FC 431 von 3M) zugegeben.

Der Verlauf des anorganischen Beschichtungsmittels war gut. Allerdings war die Haftung auf dem Substrat so gering, dass sich die Beschichtung ohne größere mechanische Beanspruchung ablöste.

### Beispiel 2

Das Beispiel 1 wurde im wesentlichen wiederholt, wobei jedoch die anorganische Schicht aus einer Mischung durch Fluten aufgetragen wurde, die anstatt Raschig OPX 0,05 Gewichtsteile N,N-Dimethyl-dithiocarbamidsäure-(3-sulfopropyl)-ester, Natriumsalz (Raschig DPS) enthielt.

Der Verlauf des Beschichtungsmittels war gut, wobei die Platte gute wasserspreitende Eigenschaften aufwies (Kontaktwinkel < 10°). Des weiteren wurde eine Platte erhalten, die gute optische Eigenschaften zeigte.

## Patentansprüche

1. Verfahren zur Herstellung wasserspreitender Kunststoffkörper aufweisend ein Kunststoffsubstrat, mindestens eine wasserspreitende, anorganische Beschichtung (a) und eine haftvermittelnde, sich zwischen dem Kunststoffsubstrat und der anorganischen Beschichtung befindliche Zwischenschicht (b), **dadurch gekennzeichnet, dass** man auf ein mit einer Zwischenschicht (b) versehenes Kunststoffsubstrat eine anorganische Beschichtung (a) durch Fluten aufbringt, wobei die zum Fluten verwendete Zusammensetzung mindestens ein Verlaufshilfsmittel mit mindestens einer anionischen Gruppe enthält, das eine hohe Mischbarkeit mit Wasser ohne Phasenbildung aufweist.

2. Verfahren gemäß Anspruch 1, **dadurch gekennzeichnet, dass** 50g des Verlaufshilfsmittel mit mindestens einer anionischen Gruppe in 1000g Wasser bei 20° gelöst werden können, ohne dass eine Phasenbildung auftritt.

3. Verfahren gemäß Anspruch 1 oder 2, **dadurch gekennzeichnet, dass** das Verlaufshilfsmittel mit mindestens einer anionischen Gruppe mindestens eine Sulfonatgruppe aufweist.

4. Verfahren gemäß Anspruch 3, **dadurch gekennzeichnet, dass** das mindestens eine Sulfonatgruppe aufweisende ionische Verlaufshilfsmittel mindestens eine polare Gruppe aufweist, die eine Carboxy-, Thiocarboxy- oder eine Iminogruppe umfasst.

5. Verfahren gemäß einem der vorhergehenden Ansprüche, **dadurch gekennzeichnet, dass** das Verlaufshilfsmittel mit mindestens einer anionischen Gruppe 2 bis 10 Kohlenstoffatome umfasst.

6. Verfahren gemäß einem der vorhergehenden Ansprüche, **dadurch gekennzeichnet, dass** das Verlaufshilfsmittel mit mindestens einer anionischen Gruppe ein anionisches Verlaufshilfsmittel ist.

7. Verfahren gemäß einem der vorhergehenden Ansprüche, **dadurch gekennzeichnet, dass** die zum Fluten verwendete Zusammensetzung mindestens ein nichtionisches Verlaufshilfsmittel umfasst.

8. Verfahren gemäß einem der vorhergehenden Ansprüche, **dadurch gekennzeichnet, dass** das Gewichtsverhältnis von Verlaufshilfsmittel mit mindestens einer anionischen Gruppe zu nichtionischem Verlaufshilfsmittel im Bereich von 0,1:1 bis 1:1 liegt.

9. Verfahren gemäß einem der vorhergehenden Ansprüche, **dadurch gekennzeichnet, dass** das Kunststoffsubstrat Cycloolefin-Copolymere, Polyethylenterephthalate, Polycarbonate und/oder Poly(meth)acrylate umfasst.

10. Verfahren gemäß einem der vorhergehenden Ansprüche, **dadurch gekennzeichnet, dass** das Kunststoffsubstrat aus Polymethylmethacrylat besteht.

11. Verfahren gemäß einem der vorhergehenden Ansprüche, **dadurch gekennzeichnet, dass** das Kunststoffsubstrat eine Schlagzähigkeit von mindestens 10 kJ/m² gemäß ISO 179/1 aufweist.

12. Verfahren gemäß einem der vorhergehenden Ansprüche, **dadurch gekennzeichnet, dass** das Kunststoffsubstrat eine Dicke im Bereich von 1 mm bis 200 mm aufweist.

13. Verfahren gemäß einem oder mehreren der vorhergehenden Ansprüche, **dadurch gekennzeichnet, dass** die Dicke der haftvermittelnden Zwischenschicht (b) im Bereich von 0,05 und 2,0 µm liegt.

14. Verfahren gemäß einem oder mehreren der vorhergehenden Ansprüche, **dadurch gekennzeichnet, dass** die haftvermittelnde Zwischenschicht mit polaren Gruppen modifizierte Vinylpolymere umfasst.

15. Verfahren gemäß einem der vorhergehenden Ansprüche, **dadurch gekennzeichnet, dass** der Kohlenstoffgehalt der anorganische Beschichtung (a) höchstens 17 Gew.-%, bezogen auf das Gewicht der Beschichtung (a), beträgt.

16. Verfahren gemäß einem der vorhergehenden Ansprüche, **dadurch gekennzeichnet, dass** zur Herstellung der anorganischen Beschichtung (a) verwendete Zusammensetzung eine kolloidale Lösung anorganischer und/oder metallorganischer Verbindungen ist.

17. Verfahren gemäß Anspruch 16, **dadurch gekennzeichnet, dass** die kolloidale Lösung bei einem pH-Wert von mindestens 7,5 aufgebracht wird.

18. Verfahren gemäß einem der vorhergehenden Ansprüche, **dadurch gekennzeichnet, dass** die anorganische Beschichtung (a) durch Kondensation einer Zusammensetzung erhältlich ist, die mindestens 80 Gew.-% Alkyltrialkoxysilane und/oder Tetraalkoxysilane, bezogen auf den Gehalt an kondensierbaren Silanen, umfasst.

19. Verfahren gemäß einem der vorhergehenden Ansprüche, **dadurch gekennzeichnet, dass** die Schichtdicke der Beschichtungen (a) und (b) im Bereich von 0,1 bis 3 µm liegt.

20. Verfahren gemäß einem oder mehreren der vorhergehenden Ansprüche,
**dadurch gekennzeichnet, dass** die Scheuerfestigkeit des Kunststoffkörpers gemäß DIN 53778 mindestens 10 000 Zyklen beträgt.

21. Verfahren gemäß einem der vorhergehenden Ansprüche, **dadurch gekennzeichnet, dass** der Kunststoffkörper einen E-Modul nach ISO 527-2 von mindestens 1500 MPa aufweist.

22. Verfahren gemäß einem der vorhergehenden Ansprüche, **dadurch gekennzeichnet, dass** der Kunststoffkörper eine Bewitterungsbeständigkeit gemäß DIN 53 387 von mindestens 5000 Stunden aufweist.

23. Verfahren gemäß einem der vorhergehenden Ansprüche, **dadurch gekennzeichnet, dass** der Kunststoffkörper eine Transparenz gemäß DIN 5033 von mindestens 70% aufweist.

24. Verfahren gemäß einem der vorhergehenden Ansprüche, **dadurch gekennzeichnet, dass** man die Beschichtung b) durch Fluten aufträgt.

## Claims

1. Process for producing plastics articles which inhibit water droplet formation and comprise a plastics substrate, at least one inorganic coating (a) which inhibits water droplet formation and an adhesion-promoting intermediate layer (b) located between the plastics substrate and the inorganic coating, **characterized in that** flow coating is used to apply an inorganic coating (a) to a plastics substrate provided with an intermediate layer (b), the composition used for the flow coating process comprising at least one flow control agent having at least one anionic group and having high miscibility with water without formation of a separate phase.

2. Process according to Claim 1, **characterized in that** 50 g of the flow control agent having at least one anionic group can be dissolved in 1000 g of water at 20° without formation of a separate phase.

3. Process according to Claim 1 or 2, **characterized in that** the flow control agent having at least one anionic group has at least one sulphonate group.

4. Process according to Claim 3, **characterized in that** the ionic flow control agent having at least one sulphonate group has at least one polar group which encompasses a carboxy, thiocarboxy or an imino group.

5. Process according to one of the preceding claims, **characterized in that** the flow control agent having at least one anionic group encompasses from 2 to 10 carbon atoms.

6. Process according to one of the preceding claims, **characterized in that** the flow control agent having at least one anionic group is an anionic flow control agent.

7. Process according to one of the preceding claims, **characterized in that** the composition used for the flow coating process encompasses at least one nonionic flow control agent.

8. Process according to one of the preceding claims, **characterized in that** the ratio by weight of flow control agent having at least one anionic group to nonionic flow control agent is in the range from 0.1:1 to 1:1.

9. Process according to one of the preceding claims, **characterized in that** the plastics substrate encompasses cycloolefin copolymers, polyethylene terephthalates, polycarbonates and/or poly(meth)acrylates.

10. Process according to one of the preceding claims, **characterized in that** the plastics substrate is composed of polymethyl methacrylate.

11. Process according to one of the preceding claims, **characterized in that** the plastics substrate has an impact strength of at least 10 kJ/m² to ISO 179/1.

12. Process according to one of the preceding claims, **characterized in that** the plastics substrate has a thickness in the range from 1 mm to 200 mm.

13. Process according to one or more of the preceding claims, **characterized in that** the thickness of the adhesion-promoting intermediate layer (b) is in the range of 0.05 and [sic] 2.0 µm.

14. Process according to one or more of the preceding claims, **characterized in that** the adhesion-promoting intermediate layer encompasses vinyl polymers modified by polar groups.

15. Process according to one of the preceding claims, **characterized in that** the carbon content of the inorganic coating (a) is at most 17% by weight, based on the weight of the coating (a).

16. Process according to one of the preceding claims, **characterized in that** [lacuna] composition used to prepare the inorganic coating (a) is colloidal solution of inorganic and/or organometallic compounds.

17. Process according to Claim 16, **characterized in that** the colloidal solution is applied at a pH of at least 7.5.

18. Process according to one of the preceding claims, **characterized in that** the inorganic coating (a) is obtainable by condensing a composition which encompasses at least 80% by weight of alkyltrialkoxysilanes and/or tetraalkoxysilanes, based on the content of condensable silanes.

19. Process according to one of the preceding claims, **characterized in that** the thickness of the coatings (a) and (b) is in the range from 0.1 to 3 µm.

20. Process according to one or more of the preceding claims, **characterized in that** the scrub resistance of the plastics article to DIN 53778 is at least 10 000 cycles.

21. Process according to one of the preceding claims, **characterized in that** the plastics article has a modulus of elasticity to ISO 527-2 of at least 1500 MPa.

22. Process according to one of the preceding claims, **characterized in that** the plastics article has a weathering resistance to DIN 53 387 of at least 5000 hours.

23. Process according to one of the preceding claims, **characterized in that** the plastics article has a transparency to DIN 5033 of at least 70%.

24. Process according to one of the preceding claims, **characterized in that** the coating (b) is applied by flow coating.

## Revendications

1. Procédé de fabrication de corps en matière plastique comportant un substrat en matière plastique, au moins un revêtement inorganique hydrofuge (a) et une couche intermédiaire (b) promotrice d'adhérence et placée entre le substrat en matière plastique et le revêtement inorganique, **caractérisé en ce qu'**on applique par noyage un revêtement inorganique (a) sur un substrat en matière plastique pourvu d'une couche intermédiaire (b), la composition utilisée pour le noyage incluant au moins un auxiliaire de dilatation contenant au moins un groupe anionique présentant une haute miscibilité à l'eau sans formation de phase.

2. Procédé selon la revendication 1, **caractérisé en ce que** 50 g d'auxiliaire de dilatation contenant au moins un groupe anionique peuvent être dissous dans 1000 g d'eau à 20° sans qu'il y ait de formation de phase.

3. Procédé selon la revendication 1 ou 2, **caractérisé en ce que** l'auxiliaire de dilatation contenant au moins un groupe anionique contient au moins un groupe sulfonate.

4. Procédé selon la revendication 3, **caractérisé en ce que** l'auxiliaire de dilatation ionique contenant ledit au moins un groupe sulfonate inclut au moins un groupe polaire qui englobe un groupe carboxy, thiocarboxy ou imine.

5. Procédé selon l'une quelconque des revendications précédentes, **caractérisé en ce que** l'auxiliaire de dilatation contenant au moins un groupe anionique inclut 2 à 10 atomes de carbone.

6. Procédé selon l'une quelconque des revendications précédentes, **caractérisé en ce que** l'auxiliaire de dilatation contenant au moins un groupe anionique est un auxiliaire de dilatation anionique.

7. Procédé selon l'une quelconque des revendications précédentes, **caractérisé en ce que** la composition utilisée pour le noyage inclut au moins un auxiliaire de dilatation non ionique.

8. Procédé selon l'une quelconque des revendications précédentes, **caractérisé en ce que** le rapport de poids entre au moins un groupe anionique et l'auxiliaire de dilatation non ionique se situe dans la plage de 0,1:1 à 1:1.

9. Procédé selon l'une quelconque des revendications précédentes, **caractérisé en ce que** le substrat en matière plastique contient des copolymères de cyclooléfine, des téréphtalates de polyéthylène, des polycarbonates et/ou des poly(méth)acrylates.

10. Procédé selon l'une quelconque des revendications précédentes, **caractérisé en ce que** le substrat en matière plastique est composé de polyméthyleméthacrylate.

11. Procédé selon l'une quelconque des revendications précédentes, **caractérisé en ce que** le substrat en matière plastique possède une résistance au choc d'au moins 10 kJ/m² suivant l'ISO 179/1.

12. Procédé selon l'une quelconque des revendications précédentes, **caractérisé en ce que** le substrat en matière plastique a une épaisseur de l'ordre de 1 mm à 200 mm.

13. Procédé selon l'une quelconque ou plusieurs des revendications précédentes, **caractérisé en ce que** l'épaisseur de la couche intermédiaire promotrice d'adhérence (b) se situe dans la plage de 0,05 à 2,0 µm.

14. Procédé selon l'une quelconque ou plusieurs des revendications précédentes, **caractérisé en ce que** la couche intermédiaire contient des polymères de vinyle modifiés avec des groupes polaires.

15. Procédé selon l'une quelconque ou plusieurs des revendications précédentes, **caractérisé en ce que** la teneur en carbone du revêtement inorganique (a) s'élève au maximum à 17 % en poids par rapport au poids du revêtement (a).

16. Procédé selon l'une quelconque ou plusieurs des revendications précédentes, **caractérisé en ce que** la composition utilisée pour préparer le revêtement inorganique (a) est une solution colloïdale de composés inorganiques et/ou métallorganiques.

17. Procédé selon la revendication 16, **caractérisé en ce que** la solution colloïdale est appliquée avec une valeur de pH d'au moins 7,5.

18. Procédé selon l'une quelconque ou plusieurs des revendications précédentes, **caractérisé en ce que** le revêtement inorganique (a) peut être obtenu par condensation d'une composition qui contient au moins 80 % en poids d'alkyletrialcoxysilane et/ou de tétraalcoxysilane par rapport à la teneur en silanes condensables.

19. Procédé selon l'une quelconque ou plusieurs des revendications précédentes, **caractérisé en ce que** l'épaisseur de couche des revêtements (a) et (b) est de l'ordre de 0,1 à 3 µm.

20. Procédé selon l'une quelconque ou plusieurs des revendications précédentes, **caractérisé en ce que** la résistance au frottement du corps en matière plastique suivant la DIN 53778 est d'au moins 10 000 cycles.

21. Procédé selon l'une quelconque ou plusieurs des revendications précédentes, **caractérisé en ce que** le corps en matière plastique présente un module E suivant l'ISO 527-2 d'au moins 1500 MPa.

22. Procédé selon l'une quelconque ou plusieurs des revendications précédentes, **caractérisé en ce que** le corps en matière plastique présente une résistance aux intempéries suivant la DIN 53 387 d'au moins 5000 heures.

23. Procédé selon l'une quelconque ou plusieurs des revendications précédentes, **caractérisé en ce que** le corps en matière plastique présente une transparence suivant la DIN 5033 d'au moins 70 %.

24. Procédé selon l'une quelconque ou plusieurs des revendications précédentes, **caractérisé en ce qu'**on applique le revêtement (b) par noyage.
